# EUROPEAN PATENT APPLICATION

(11) **EP 1 400 903 A1**
(43) Date of publication of application: **24.03.2004**
(21) Application number: 03255294.5
(22) Date of filing: 26.08.2003
(51) Int. Cl.: G06F 17/30

(54) **Information storage and retrieval**

(30) Priority: 19.09.2002 GB 0221774; 12.12.2002 GB 0229072
(71) Applicant: SONY UNITED KINGDOM LIMITED, Weybridge KT13 0XW (GB)
(72) Inventor: Thorpe, Jonathan Richard, Winchester SO22 4QF (GB)
(74) Representative: Turner, James Arthur

(57) **Abstract**

An information retrieval system in which a set of distinct inormation items map to respective nodes in an array nodes of a self-organising map by mutual similarity of the information items, so that similar information items map to nodes at similar positions in the array of nodes; comprises a data network; an information retrieval client system connected to the data network; and one or more information item storage nodes connected to the data network; in which: each storage node comprises means for storing a plurality of information items and means for transmitting data derived from information items stored at that storage node to the client system via the data network; and the client system comprises means, responsive to data received from the indexing means of a storage node, for generating a node position in respect of each information item represented by the received data.

## Description

This invention relates to information storage and retrieval.

There are many established systems for locating information (e.g. documents, images, emails, patents, internet content or media content such as audio/video content) by searching under keywords. Examples include internet search "engines" such as those provided by "Google" ^{TM} or "Yahoo" ™ where a search carried out by keyword leads to a list of results which are ranked by the search engine in order of perceived relevance.

However, in a system encompassing a large amount of content, often referred to as a massive content collection, it can be difficult to formulate effective search queries to give a relatively short list of search "hits". For example, at the time of preparing the present application, a Google search on the keywords "massive document collection" drew 243000 hits. This number of hits would be expected to grow if the search were repeated later, as the amount of content stored across the internet generally increases with time. Reviewing such a list of hits can be prohibitively time-consuming.

In general, some reasons why massive content collections are not well utilised are:
- a user doesn't know that relevant content exists
- a user knows that relevant content exists but does not know where it can be located
- a user knows that content exists but does not know it is relevant
- a user knows that relevant content exists and how to find it, but finding the content takes a long time

The paper "Self Organisation of a Massive Document Collection", Kohonen et al, IEEE Transactions on Neural Networks, Vol 11, No. 3, May 2000, pages 574-585 discloses a technique using so-called "self-organising maps" (SOMs). These make use of so-called unsupervised self learning neural network algorithms in which "feature vectors" representing properties of each document are mapped onto nodes of a SOM.

In the Kohonen et al paper, a first step is to pre-process the document text, and then a feature vector is derived from each pre-processed document. In one form, this may be a histogram showing the frequencies of occurrence of each of a large dictionary of words. Each data value (i.e. each frequency of occurrence of a respective dictionary word) in the histogram becomes a value in an n-value vector, where n is the total number of candidate words in the dictionary (43222 in the example described in this paper). Weighting may be applied to the n vector values, perhaps to stress the increased relevance or improved differentiation of certain words.

The n-value vectors are then mapped onto smaller dimensional vectors (i.e. vectors having a number of values m (500 in the example in the paper) which is substantially less than n. This is achieved by multiplying the vector by an (n x m) "projection matrix" formed of an array of random numbers. This technique has been shown to generate vectors of smaller dimension where any two reduced-dimension vectors have much the same vector dot product as the two respective input vectors. This vector mapping process is described in the paper "Dimensionality Reduction by Random Mapping: Fast Similarity Computation for Clustering", Kaski, Proc IJCNN, pages 413-418, 1998.

The reduced dimension vectors are then mapped onto nodes (otherwise called neurons) on the SOM by a process of multiplying each vector by a "model" (another vector). The models are produced by a learning process which automatically orders them by mutual similarity onto the SOM, which is generally represented as a two-dimensional grid of nodes. This is a non-trivial process which took Kohonen et al six weeks on a six-processor computer having 800 MB of memory, for a document database of just under seven million documents. Finally the grid of nodes forming the SOM is displayed, with the user being able to zoom into regions of the map and select a node, which causes the user interface to offer a link to an internet page containing the document linked to that node.

This invention provides an information retrieval system in which a set of distinct information items map to respective nodes in an array of nodes by mutual similarity of the information items, so that similar information items map to nodes at similar positions in the array of nodes; the system comprising:
a data network;
an information retrieval client system connected to the data network; and
one or more (though preferably two or more) information item storage nodes connected to the data network;
in which:
each storage node comprises means for storing a plurality of information items and indexing means for transmitting data derived from information items stored at that storage node to the client system via the data network; and
the client system comprises means, responsive to data received from the indexing means of a storage node, for generating a node position in respect of each information item represented by the received data.

The invention provides an efficient and convenient way of operating an information retrieval system over a network such as the internet.

Further respective aspects and features of the invention are defined in the appended claims.

The skilled man will realise that in the present specification, within the normal usage of the word "list", the "data representing information items" could be the item itself, if it is of a size and nature appropriate for full display, or could be data indicative of the item.

Further respective aspects and features of the invention are defined in the appended claims.

Embodiments of the invention will now be described, by way of example only, with reference to the accompanying drawings in which:
Figure 1 schematically illustrates an information storage and retrieval system;
Figure 2 is a schematic flow chart showing the generation of a self-organising map (SOM);
Figures 3a and 3b schematically illustrate term frequency histograms;
Figure 4a schematically illustrates a raw feature vector;
Figure 4b schematically illustrates a reduced feature vector;
Figure 5 schematically illustrates an SOM;
Figure 6 schematically illustrates a dither process;
Figures 7 to 9 schematically illustrate display screens providing a user interface to access information represented by the SOM;
Figure 10 schematically illustrates a camcorder as an example of a video acquisition and/or processing apparatus;
Figure 11 schematically illustrates a personal digital assistant as an example of portable data processing apparatus; and
Figure 12 schematically illustrates a networked information storage and retrieval system.

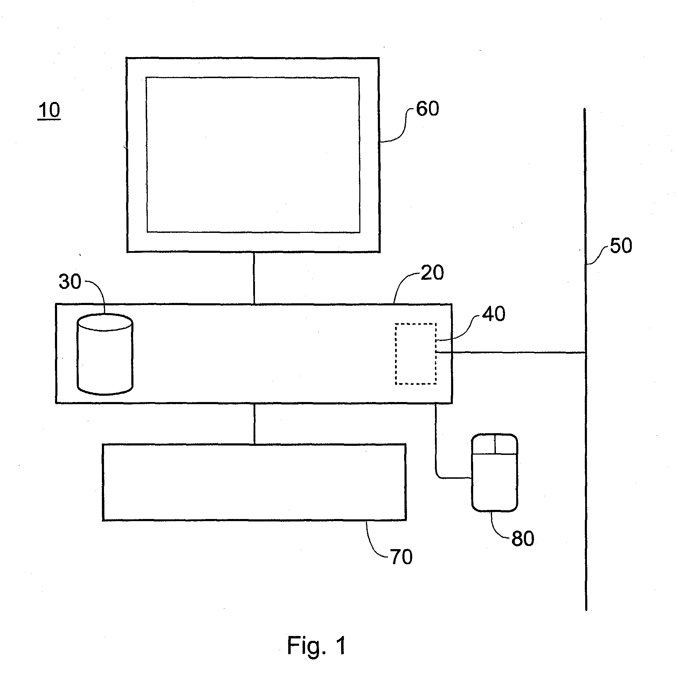

Figure 1 is a schematic diagram of an information storage and retrieval system based around a general-purpose computer 10 having a processor unit 20 including disk storage 30 for programs and data, a network interface card 40 connected to a network 50 such as an Ethernet network or the Internet, a display device such as a cathode ray tube device 60, a keyboard 70 and a user input device such as a mouse 80. The system operates under program control, the programs being stored on the disk storage 30 and provided, for example, by the network 50, a removable disk (not shown) or a pre-installation on the disk storage 30.

The storage system operates in two general modes of operation. In a first mode, a set of information items (e.g. textual information items) is assembled on the disk storage 30 or on a network disk drive connected via the network 50 and is sorted and indexed ready for a searching operation. The second mode of operation is the actual searching against the indexed and sorted data.

The embodiments are applicable to many types of information items. A non-exhaustive list of appropriate types of information includes patents, video material, emails, presentations, internet content, broadcast content, business reports, audio material, graphics and clipart, photographs and the like, or combinations or mixtures of any of these. In the present description, reference will be made to textual information items, or at least information items having a textual content or association. So, for example, a piece of broadcast content such as audio and/or video material may have associated "MetaData" defining that material in textual terms.

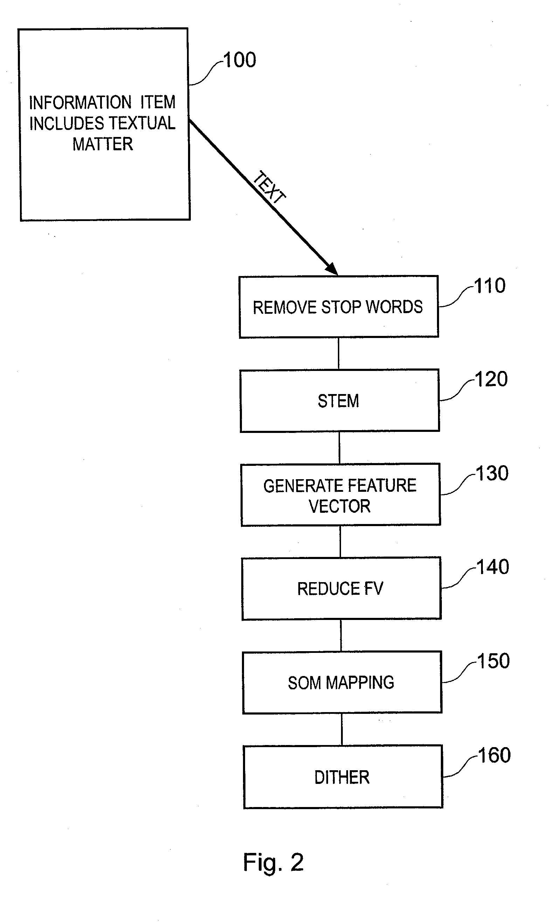

The information items are loaded onto the disk storage 30 in a conventional manner. Preferably, they are stored as part of a database structure which allows for easier retrieval and indexing of the items, but this is not essential. Once the information and items have been so stored, the process used to arrange them for searching is shown schematically in Figure 2.

It will be appreciated that the indexed information data need not be stored on the local disk drive 30. The data could be stored on a remote drive connected to the system 10 via the network 50. Alternatively, the information may be stored in a distributed manner, for example at various sites across the internet. If the information is stored at different internet or network sites, a second level of information storage could be used to store locally a "link" (e.g. a URL) to the remote information, perhaps with an associated summary, abstract or MetaData associated with that link. So, the remotely held information would not be accessed unless the user selected the relevant link (e.g. from the results list 260 to be described below), although for the purposes of the technical description which follows, the remotely held information, or the abstract/summary/MetaData, or the link/URL could be considered as the "information item".

In other words, a formal definition of the "information item" is an item from which a feature vector is derived and processed (see below) to provide a mapping to the SOM. The data shown in the results list 260 (see below) may be the information item itself (if it is held locally and is short enough for convenient display) or may be data representing and/or pointing to the information item, such as one or more of MetaData, a URL, an abstract, a set of key words, a representative key stamp image or the like. This is inherent in the operation "list" which often, though not always, involves listing *data representing* a set of items.

In a further example, the information items could be stored across a networked work group, such as a research team or a legal firm. A hybrid approach might involve some information items stored locally and/or some information items stored across a local area network and/or some information items stored across a wide area network. In this case, the system could be useful in locating similar work by others, for example in a large multi-national research and development organisation, similar research work would tend to be mapped to similar output nodes in the SOM (see below). Or, if a new television programme is being planned, the present technique could be used to check for its originality by detecting previous programmes having similar content.

It will also be appreciated that the system 10 of Figure 1 is but one example of possible systems which could use the indexed information items. Although it is envisaged that the initial (indexing) phase would be carried out by a reasonably powerful computer, most likely by a non-portable computer, the later phase of accessing the information could be carried out at a portable machine such as a "personal digital assistant" (a term for a data processing device with display and user input devices, which generally fits in one hand), a portable computer such as a laptop computer, or even devices such as a mobile telephone, a video editing apparatus or a video camera. In general, practically any device having a display could be used for the information-accessing phase of operation.

The processes are not limited to particular numbers of information items.

The process of generating a self-organising map (SOM) representation of the information items will now be described with reference to Figures 2 to 6. Figure 2 is a schematic flow chart illustrating a so-called "feature extraction" process followed by an SOM mapping process.

Feature extraction is the process of transforming raw data into an abstract representation. These abstract representations can then be used for processes such as pattern classification, clustering and recognition. In this process, a so-called "feature vector" is generated, which is an abstract representation of the frequency of terms used within a document.

The process of forming the visualisation through creating feature vectors includes:
- Create "document database dictionary" of terms
- Create "term frequency histograms" for each individual document based on the "document database dictionary"
- Reduce the dimension of the "term frequency histogram" using random mapping
- Create a 2-dimensional visualisation of the information space.

Considering these steps in more detail, each document (information item) 100 is opened in turn. At a step 110, all "stop words" are removed from the document. Stop-words are extremely common words on a pre-prepared list, such as "a", "the", "however", "about", "and", and "the". Because these words are extremely common they are likely, on average, to appear with similar frequency in all documents of a sufficient length. For this reason they serve little purpose in trying to characterise the content of a particular document and should therefore be removed.

After removing stop-words, the remaining words are stemmed at a step 120, which involves finding the common stem of a word's variants. For example the words "thrower", "throws", and "throwing" have the common stem of "throw".

A "dictionary" of stemmed words appearing in the documents (excluding the "stop" words) is maintained. As a word is newly encountered, it is added to the dictionary, and a running count of the number of times the word has appeared in the whole document collection (set of information items) is also recorded.

The result is a list of terms used in all the documents in the set, along with the frequency with which those terms occur. Words that occur with too high or too low a frequency are discounted, which is to say that they are removed from the dictionary and do not take part in the analysis which follows. Words with too low a frequency may be misspellings, made up, or not relevant to the domain represented by the document set. Words that occur with too high a frequency are less appropriate for distinguishing documents within the set. For example, the term "News" is used in about one third of all documents in a test set of broadcast-related documents, whereas the word "football" is used in only about 2% of documents in the test set. Therefore "football" can be assumed to be a better term for characterising the content of a document than "News". Conversely, the word "fottball" (a misspelling of "football") appears only once in the entire set of documents, and so is discarded for having too low an occurrence. Such words may be defined as those having a frequency of occurrence which is lower than two standard deviations less than the mean frequency of occurrence, or which is higher than two standard deviations above the mean frequency of occurrence.

A feature vector is then generated at a step 130.

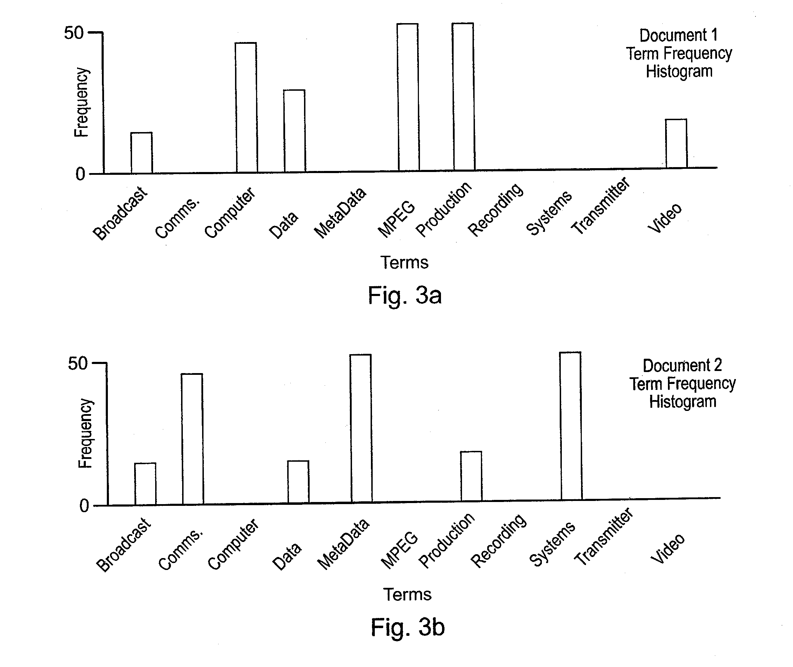

To do this, a term frequency histogram is generated for each document in the set. A term frequency histogram is constructed by counting the number of times words present in the dictionary (pertaining to that document set) occur within an individual document. The majority of the terms in the dictionary will not be present in a single document, and so these terms will have a frequency of zero. Schematic examples of term frequency histograms for two different documents are shown in Figures 3a and 3b.

It can be seen from this example how the histograms characterise the content of the documents. By inspecting the examples it is seen that document 1 has more occurrences of the terms "MPEG" and "Video" than document 2, which itself has more occurrences of the term "MetaData". Many of the entries in the histogram are zero as the corresponding words are not present in the document.

In a real example, the actual term frequency histograms have a very much larger number of terms in them than the example. Typically a histogram may plot the frequency of over 50000 different terms, giving the histogram a dimension of over 50000. The dimension of this histogram needs to be reduced considerably if it is to be of use in building an SOM information space.

Each entry in the term frequency histogram is used as a corresponding value in a feature vector representing that document. The result of this process is a (50000 x 1) vector containing the frequency of all terms specified by the dictionary for each document in the document collection. The vector may be referred to as "sparse" since most of the values will typically be zero, with most of the others typically being a very low number such as 1.

The size of the feature vector, and so the dimension of the term frequency histogram, is reduced at a step 140. Two methods are proposed for the process of reducing the dimension of the histogram.
i) Random Mapping - a technique by which the histogram is multiplied by a matrix of random numbers. This is a computationally cheap process.
ii) Latent Semantic Indexing - a technique whereby the dimension of the histogram is reduced by looking for groups of terms that have a high probability of occurring simultaneously in documents. These groups of words can then be reduced to a single parameter. This is a computationally expensive process.

The method selected for reducing the dimension of the term frequency histogram in the present embodiment is "random mapping", as explained in detail in the Kaski paper referred to above. Random mapping succeeds in reducing the dimension of the histogram by multiplying it by a matrix of random numbers.

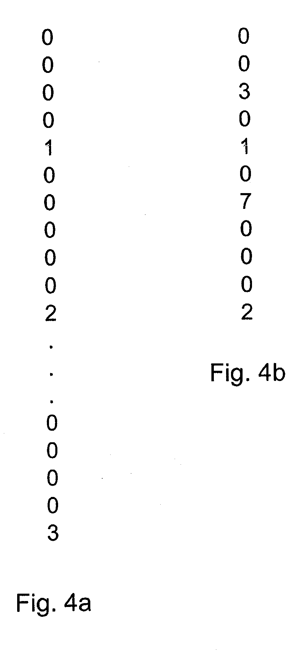

As mentioned above, the "raw" feature vector (shown schematically in Figure 4a) is typically a sparse vector with a size in the region of 50000 values. This can be reduced to a size of about 200 (see schematic Figure 4b) and still preserve the *relative* characteristics of the feature vector, that is to say, its relationship such as relative angle (vector dot product) with other similarly processed feature vectors. This works because although the number of orthogonal vectors of a particular dimension is limited, the number of *nearly* orthogonal vectors is very much larger.

In fact as the dimension of the vector increases any given set of randomly generated vectors are nearly orthogonal to each other. This property means that the relative direction of vectors multiplied by this matrix of random numbers will be preserved. This can be demonstrated by showing the similarity of vectors before and after random mapping by looking at their dot product.

It can be shown experimentally that reducing a sparse vector from 50000 values to 200 values preserves their relative similarities. However, this mapping is not perfect, but suffices for the purposes of characterising the content of a document in a compact way.

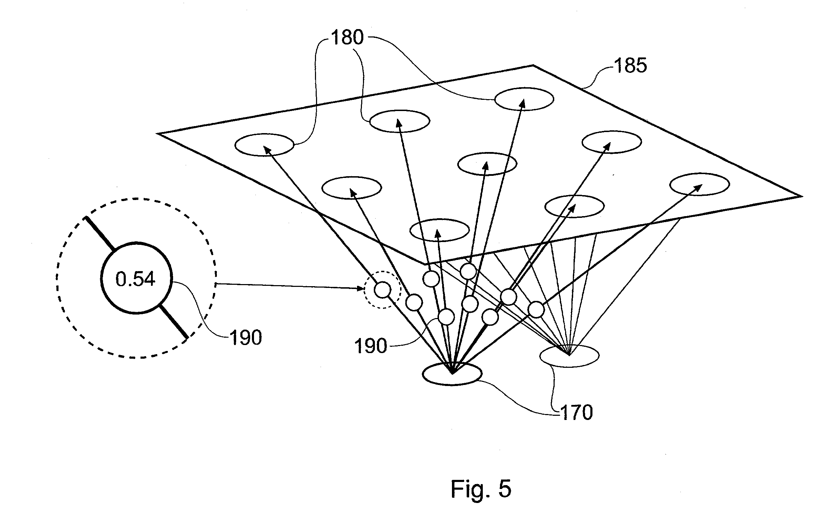

Once feature vectors have been generated for the document collection, thus defining the collection's information space, they are projected into a two-dimensional SOM at a step 150 to create a semantic map. The following section explains the process of mapping to 2-D by clustering the feature vectors using a Kohonen self-organising map. Reference is also made to Figure 5.

A Kohonen Self-Organising map is used to cluster and organise the feature vectors that have been generated for each of the documents.

A self-organising map consists of input nodes 170 and output nodes 180 in a two-dimensional array or grid of nodes illustrated as a two-dimensional plane 185. There are as many input nodes as there are values in the feature vectors being used to train the map. Each of the output nodes on the map is connected to the input nodes by weighted connections 190 (one weight per connection).

Initially each of these weights is set to a random value, and then, through an iterative process, the weights are "trained". The map is trained by presenting each feature vector to the input nodes of the map. The "closest" output node is calculated by computing the Euclidean distance between the input vector and weights of each of the output nodes.

The closest node is designated the "winner" and the weights of this node are trained by slightly changing the values of the weights so that they move "closer" to the input vector. In addition to the winning node, the nodes in the neighbourhood of the winning node are also trained, and moved slightly closer to the input vector.

It is this process of training not just the weights of a single node, but the weights of a region of nodes on the map, that allow the map, once trained, to preserve much of the topology of the input space in the 2-D map of nodes.

Once the map is trained, each of the documents can be presented to the map to see which of the output nodes is closest to the input feature vector for that document. It is unlikely that the weights will be identical to the feature vector, and the Euclidean distance between a feature vector and its nearest node on the map is known as its "quantisation error".

By presenting the feature vector for each document to the map to see where it lies yields and x, y map position for each document. These x, y positions when put in a look up table along with a document ID can be used to visualise the relationship between documents.

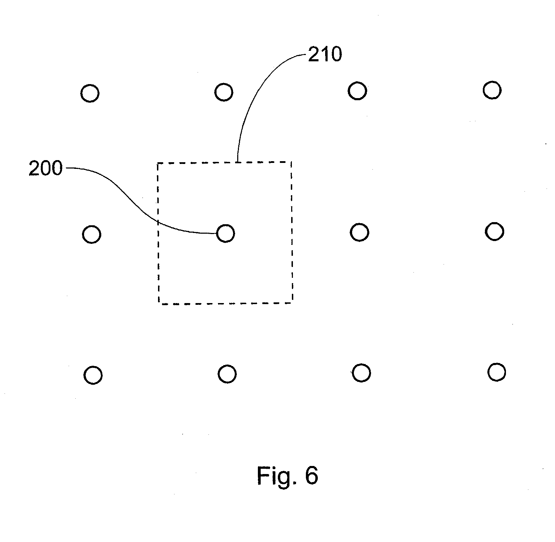

Finally, a dither component is added at a step 160, which will be described with reference to Figure 6 below.

A potential problem with the process described above is that two identical, or substantially identical, information items may be mapped to the same node in the array of nodes of the SOM. This does not cause a difficulty in the handling of the data, but does not help with the visualisation of the data on display screen (to be described below). In particular, when the data is visualised on a display screen, it has been recognised that it would be useful for multiple very similar items to be distinguishable over a single item at a particular node. Therefore, a "dither" component is added to the node position to which each information item is mapped. The dither component is a random addition of up to ±¹/₂ of the node separation. So, referring to Figure 6, an information item for which the mapping process selects an output node 200 has a dither component added so that it in fact may be mapped to any node position within the area 210 bounded by dotted lines on Figure 6.

So, the information items can be considered to map to positions on the plane of Figure 6 at node positions other than the "output nodes" of the SOM process.

An alternative approach might be to use a much higher density of "output nodes" in the SOM mapping process described above. This would not provide any distinction between absolutely identical information items, but may allow almost, but not completely, identical information items to map to different but closely spaced output nodes.

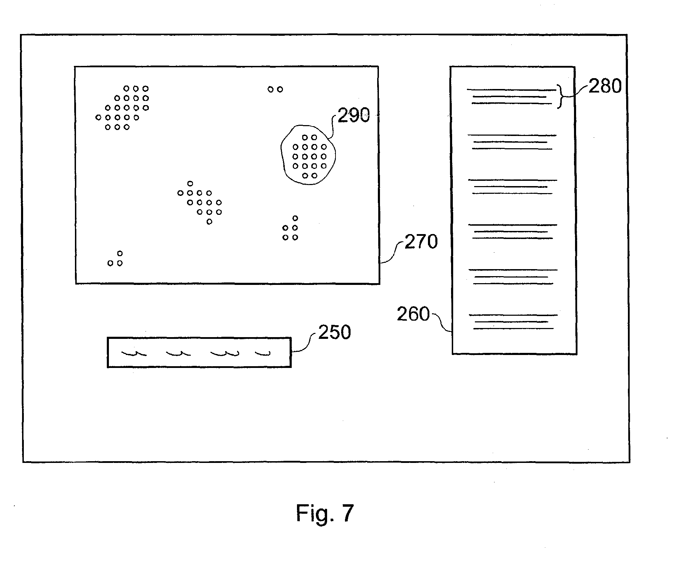

Figure 7 schematically illustrates a display on the display screen 60 in which data sorted into an SOM is graphically illustrated for use in a searching operation. The display shows a search enquiry 250, a results list 260 and an SOM display area 270.

In operation, the user types a key word search enquiry into the enquiry area 250. The user then initiates the search, for example by pressing enter on the keyboard 70 or by using the mouse 80 to select a screen "button" to start the search. The key words in the search enquiry box 250 are then compared with the information items in the database using a standard keyword search technique. This generates a list of results, each of which is shown as a respective entry 280 in the list view 260. Also, each result has a corresponding display point on the node display area 270.

Because the sorting process used to generate the SOM representation tends to group mutually similar information items together in the SOM, the results for the search enquiry generally tend to fall in clusters such as a cluster 290. Here, it is noted that each point on the area 270 corresponds to the respective entry in the SOM associated with one of the results in the result list 260; and the positions at which the points are displayed within the area 270 correspond to the array positions of those nodes within the node array.

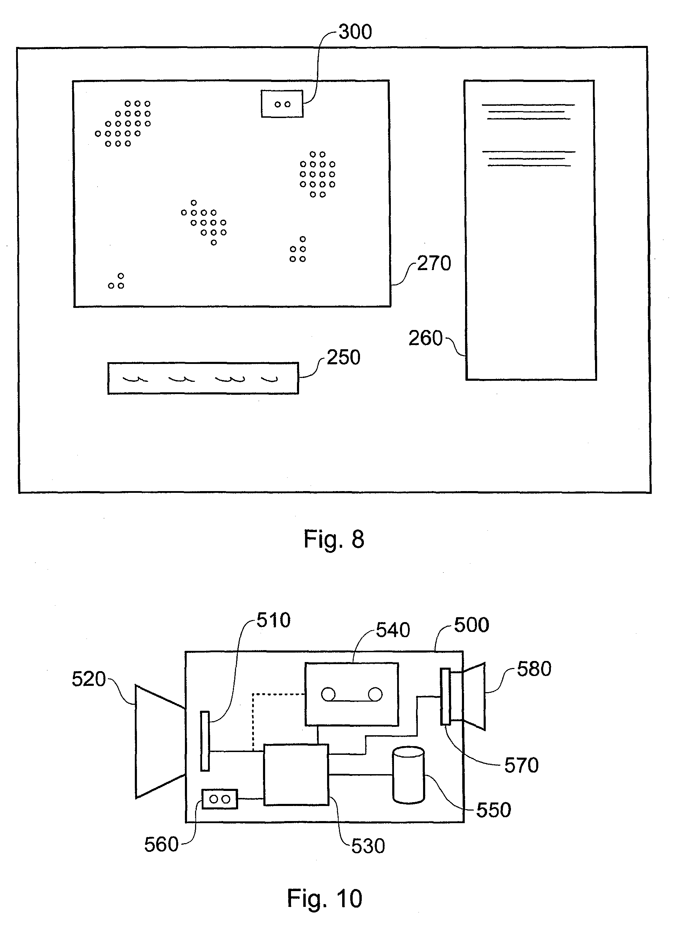

Figure 8 schematically illustrates a technique for reducing the number of "hits" (results in the result list). The user makes use of the mouse 80 to draw a box 300 around a set of display points corresponding to nodes of interest. In the results list area 260, only those results corresponding to points within the box 300 are displayed. If these results turn out not to be of interest, the user may draw another box encompassing a different set of display points.

It is noted that the results area 260 displays list entries for those results for which display points are displayed within the box 300 and which satisfied the search criteria in the word search area 250. The box 300 may encompass other display positions corresponding to populated nodes in the node array, but if these did not satisfy the search criteria they will not be displayed and so will not form part of the subset of results shown in the box 260.

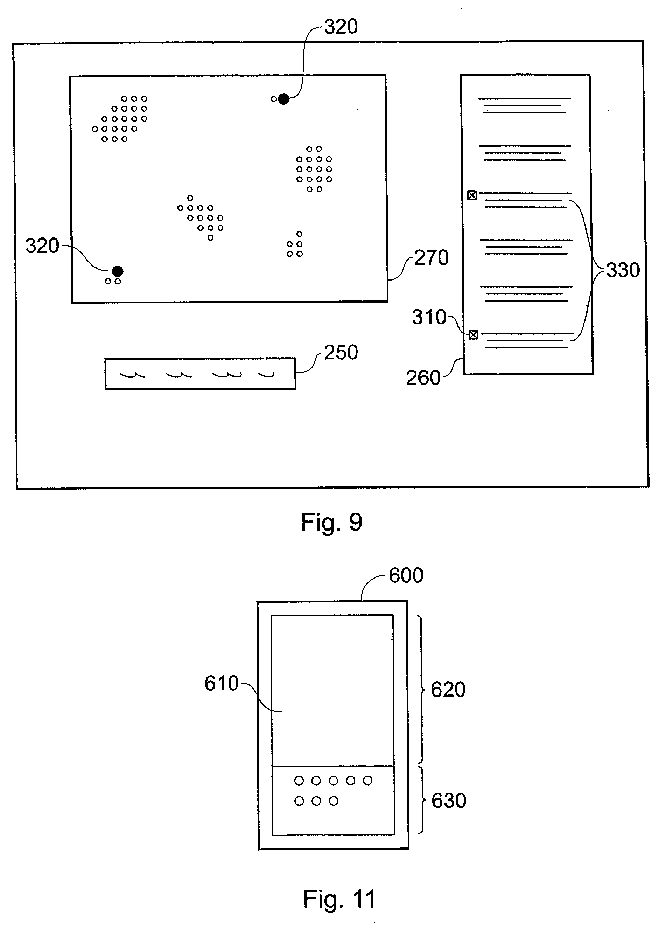

Figure 9 schematically illustrates a technique for detecting the node position of an entry in the list view 260. Using a standard technique in the field of graphical user interfaces, particularly in computers using the so-called "Windows" TM operating system, the user may "select" one or more of the entries in the results list view. In the examples shown, this is done by a mouse click on a "check box" 310 associated with the relevant results. However, it could equally be done by clicking to highlight the whole result, or by double-clicking on the relevant result and so on. As a result is selected, the corresponding display point representing the respective node in the node array is displayed in a different manner. This is shown schematically for two display points 320 corresponding to the selected results 330 in the results area 260.

The change in appearance might be a display of the point in a larger size, or in a more intense version of the same display colour, or in a different display colour, or in a combination of these varying attributes.

At any time, a new information item can be added to the SOM by following the steps outlined above (i.e. steps 110 to 140) and then applying the resulting reduced feature vector to the "pre-trained" SOM models, that is to say, the set of SOM models which resulted from the self-organising preparation of the map. So, for the newly added information item, the map is not generally "retrained"; instead steps 150 and 160 are used with all of the SOM models not being amended. To retrain the SOM every time a new information item is to be added is computationally expensive and is also somewhat unfriendly to the user, who might grow used to the relative positions of commonly accessed information items in the map.

However, there may well come a point at which a retraining process is appropriate. For example, if new terms (perhaps new items of news, or a new technical field) have entered into the dictionary since the SOM was first generated, they may not map particularly well to the existing set of output nodes. This can be detected as an increase in a so-called "quantisation error" detected during the mapping of newly received information item to the existing SOM. In the present embodiments, the quantisation error is compared to a threshold error amount. If it is greater than the threshold amount then either (a) the SOM is automatically retrained, using all of its original information items and any items added since its creation; or (b) the user is prompted to initiate a retraining process at a convenient time. The retraining process uses the feature vectors of all of the relevant information items and reapplies the steps 150 and 160 in full.

Figure 10 schematically illustrates a camcorder 500 as an example of a video acquisition and/or processing apparatus, the camcorder including an image capture device 510 with an associated lens 520; a data/signal processor 530; tape storage 540; disk or other random access storage 550; user controls 560; and a display device 570 with eyepiece 580. Other features of conventional camcorders or other alternatives (such as different storage media or different display screen arrangements) will be apparent to the skilled man. In use, MetaData relating to captured video material may be stored on the storage 550, and an SOM relating to the stored data viewed on the display device 570 and controlled as described above using the user controls 560.

Figure 11 schematically illustrates a personal digital assistant (PDA) 600, as an example of portable data processing apparatus, having a display screen 610 including a display area 620 and a touch sensitive area 630 providing user controls; along with data processing and storage (not shown). Again, the skilled man will be aware of alternatives in this field. The PDA may be used as described above in connection with the system of Figure 1.

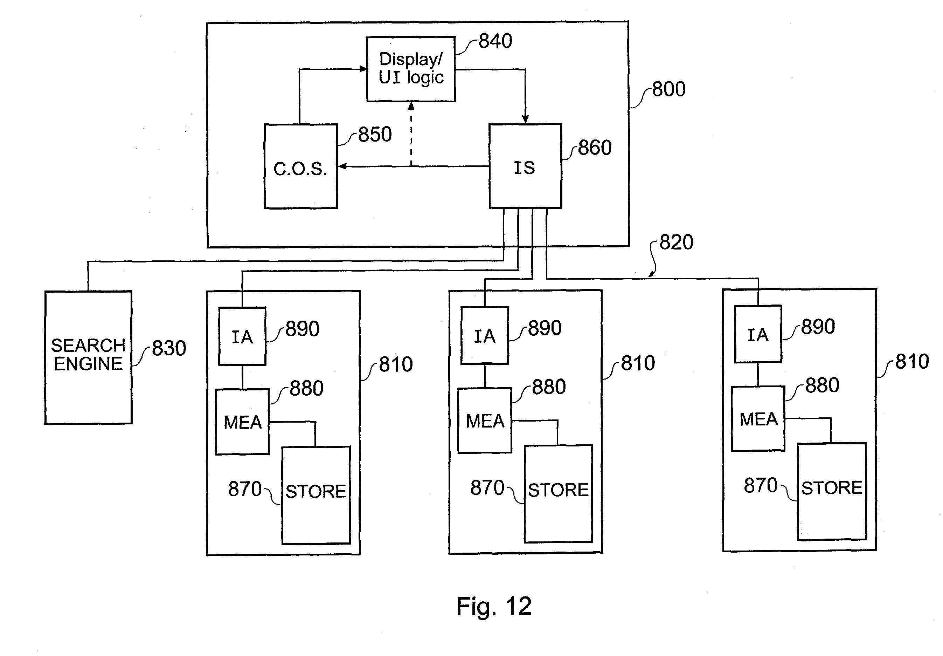

Figure 12 schematically illustrates a networked information storage and retrieval apparatus. The system may operate under software control as described earlier.

The functionality of the arrangement of Figure 1 and the subsequent description is achieved in a networked system, with some additional features to enhance the efficiency of use of the networked system.

In general terms, the operation is divided between a client system 800 and one or more storage nodes 810, the client system and the storage nodes being connected to one another by a networked connection such as an internet connection 820. In Figure 12 schematic connections are shown between each storage node 810 and the client system. Many network arrangements including the internet will notionally provide a physical connection between all of the nodes connected to that network, including between pairs of storage nodes 810. However the connections in Figure 12 are intended to represent logical data paths between the different nodes.

A search engine or internet search provider (server) 830, for example the known Google^{RTM} search provider, may also be logically connected to the client system.

The client system 800 comprises display / user interface logic 840 providing (or being connectable to) a user display operating as described above, content organisation service logic 850 and index service logic 860. Each storage node comprises information storage (e.g. disk storage) 870, optional metadata extraction logic 880 and index agent logic 890. Apart from any information held at the search engine 830, the information storage 870 of the storage nodes is the primary repository of the information items in this embodiment. However, it will be appreciated that this is just for the purposes of the present example; there is no technical reason why information items could not also be stored "locally", i.e. at the client system.

The client system provides the following functionality described earlier:
- optionally, the functionality of Figure 2 and subsequent description, i.e. the generation of an SOM (although the SOM representation could have been generated elsewhere)
- some or all of the functionality of Figures 7 to 9, i.e. the display of the SOM representation and interface with the user in handling the SOM representation
- at least part of the functionality of adding a newly received information item to an "already trained" SOM representation, optionally including the functionality of initiating a retraining process. It is noted that some steps, such as the steps 110 and 120, may be carried out at the storage node rather than at the client system.

In basic terms, the index agent at each storage node derives data (e.g. by steps corresponding to the steps 110, 120) from textual matter either contained in an information item stored at that node or derived from such an information item by the metadata extraction logic 880 (e.g. in respect of information items consisting at least primarily of audio/video material). The resulting data is then forwarded to the indexing service logic 860 of the client system. This can take place in one or more of several ways:
- the index agent can forward a batch of data representing data derived from an information item as that information item is detected to be newly stored or newly modified
- the index agent can forward a batch of data representing data derived from all information items held at that storage node, in response to a search query (or an information retrieval query operation) at the client system
- the index agent can forward a batch of data representing data derived from all information items held at that storage node, in response to a certain length of time having passed since it last did so
- the index agent can maintain a register of those information items for which data has already been forwarded to the client system, and those for which it has not. In response to a search query (or an information retrieval query operation) at the client system, the index agent can forward some or all of the "not yet forwarded" data, as one or more batches of data. Information items for which data has been forwarded in this way are moved from the "not yet forwarded" list to the "forwarded" list at that storage node's index agent.

The data forwarded to the client system can be, for example, one or more of:
(a) the information item itself (or at least a textual part thereof)
(b) metadata (e.g. text data) derived from the information item
(c) the results of step 110 as carried out on (a) or (b)
(d) the results of step 120 as carried out on (a) or (b)
(e) a feature vector derived from (a) or (b)

At the client system, when any of (a) to (d) is received from an index agent, the content organisation service logic generates a feature vector and, from that, an SOM map position, which is stored at the client system, along with an identifier of the information item (e.g. a URL or URI - universal resource indicator) which identifies where the information item is stored. If (e) is received, an SOM map position is generated and stored at the client system along with a URL/URI.

When the user generates a query, the user control (input to the logic 840) is passed to the index service logic 860 which then distributes it to the nodes connected to the network. They respond with data as described above, which is assimilated into the SOM representation for display to the user.

Instead of a storage node as described above, the indexing service logic may receive similar data from an Internet search engine such as Google^{RTM}. This data is handled in the same way as already described. The transmission of the data form the search engine to the indexing service may be initiated in any of the ways described above.

### PREFERRED FEATURES OF THE INVENTION

Various preferred features of the invention are also defined in the following numbered paragraphs.
1. An information retrieval system such as that described with reference to Figure 12 in which a set of distinct information items map to respective nodes in an array of nodes by mutual similarity of the information items, so that similar information items map to nodes at similar positions in the array of nodes; the system comprising: a graphical user interface for displaying a representation of at least some of the nodes as a two-dimensional display array of display points within a display area on a user display; a user control for defining a two-dimensional region of the display area; and a detector for detecting those display points lying within the two-dimensional region of the display area; the graphical user interface also displaying a list of data representing information items, being those information items mapped onto nodes corresponding to display points displayed within the two-dimensional region of the display area.
2. A system according to paragraph 1, in which the information items are mapped to nodes in the array on the basis of a feature vector derived from each information item.
3. A system according to paragraph 2, in which the feature vector for an information item represents a set of frequencies of occurrence, within that information item, of each of a group of information features.
4. A system according to paragraph 3, in which the information items comprise textual information, the feature vector for an information item represents a set of frequencies of occurrence, within that information item, of each of a group of words.
5. A system according to paragraph 1 or paragraph 2, in which the information items comprise textual information, the nodes being mapped by mutual similarity of at least a part of the textual information.
6. A system according to paragraph 4 or paragraph 5, in which the information items are pre-processed for mapping by excluding words occurring with more than a threshold frequency amongst the set of information items.
7. A system according to any one of paragraphs 4 to 6, in which the information items are pre-processed for mapping by excluding words occurring with less than a threshold frequency amongst the set of information items.
8. A system according to any one of paragraphs 4 to 7, comprising: search means for carrying out a word-related search of the information items; the search means and the graphical user interface being arranged to co-operate so that only those display points corresponding to information items selected by the search are displayed.
9. A system according to any one of the preceding paragraphs, in which the mapping between information items and nodes in the array includes a dither component so that substantially identical information items tend to map to closely spaced but different nodes in the array.
10. A system according to any one of the preceding paragraphs, comprising a user control for choosing one or more information items from the list; the graphical user interface being operable to alter the manner of display within the display area of display points corresponding to selected information items.
11. A system according to paragraph 10, in which the graphical user interface is operable to display in a different colour and/or intensity those display points corresponding to information items chosen within the list.
12. An information storage system in which a set of distinct information items are processed so as to map to respective nodes in an array of nodes by mutual similarity of the information items, such that similar information items map to nodes at similar positions in the array of nodes; the system comprising: means for generating a feature vector derived from each information item, the feature vector for an information item representing a set of frequencies of occurrence, within that information item, of each of a group of information features; and means for mapping each feature vector to a node in the array of nodes, the mapping between information items and nodes in the array including a dither component so that substantially identical information items tend to map to closely spaced but different nodes in the array.
13. A system according to paragraph 12, comprising: means for mapping a newly received information item to a node in the array of nodes; means for detecting a mapping error as the newly received information item is so mapped; and means responsive to a detection that the mapping error exceeds a threshold error amount, for initiating a remapping process of the set of information items and the newly received information item.
17. An information storage method in which a set of distinct information items are processed so as to map to respective nodes in an array of nodes by mutual similarity of the information items, such that similar information items map to nodes at similar positions in the array of nodes; the method comprising the steps of: generating a feature vector derived from each information, the feature vector for an information item representing a set of frequencies of occurrence, within that information item, of each of a group of information features; and mapping each feature vector to a node in the array of nodes, the mapping between information items and nodes in the array including a dither component so that substantially identical information items tend to map to closely spaced but different nodes in the array.
18. An information retrieval method in which a set of distinct information items map to respective nodes in an array of nodes by mutual similarity of the information items, so that similar information items map to nodes at similar positions in the array of nodes; the method comprising: displaying a representation of at least some of the nodes as a two-dimensional display array of display points within a display area on a user display; defining, with a user control, a two-dimensional region of the display area; detecting those display points lying within the two-dimensional region of the display area; and displaying a list of data representing information items, being those information items mapped onto nodes corresponding to display points displayed within the two-dimensional region of the display area.

## Claims

1. An information retrieval system in which a set of distinct information items map to respective nodes in an array of nodes by mutual similarity of the information items, so that similar information items map to nodes at similar positions in the array of nodes; the system comprising:
a data network;
an information retrieval client system connected to the data network; and
one or more information item storage nodes connected to the data network;
in which:
each storage node comprises means for storing a plurality of information items and indexing means for transmitting data derived from information items stored at that storage node to the client system via the data network; and
the client system comprises means, responsive to data received from the indexing means of a storage node, for generating a node position in respect of each information item represented by the received data.

2. A system according to claim 1, in which the indexing means at each storage node is operable to transmit data to the client system to the client system in batches; each batch comprising at least data derived from some of those information items stored at that storage node for which data has not previously been transmitted to the client system.

3. A system according to claim 2, in which each batch of data comprises data derived from those information items stored at that storage node for which data has not previously been transmitted to the client system.

4. A system according to any one of claims 1 to 3, in which the indexing means at each storage node is operable to transmit to the client system a batch of data derived from information items stored at that storage node in response to an information retrieval operation at the client system.

5. A system according to any one of claims 1 to 3, in which the indexing means at each storage node is operable to detect an information item which is modified or newly stored at that storage node and, in response to such a detection, to send a batch of data derived from that information item to the client system.

6. A system according to any one of the preceding claims, in which the data network is an internet network.

7. A system according to claim 6, in which one or more of the storage nodes are internet search servers.

8. A system according to any one of the preceding claims, in which:
the information items are at least partially textual; and
the data derived form a stored information item comprises the whole of the textual content of that information item.

9. A system according to any one of claims 1 to 7, in which the data derived from a stored information item comprises textual data indicative of the content of the stored information item.

10. A system according to any one of the preceding claims, in which the client system comprises a graphical user interface for displaying a representation of at least some of the nodes as a two-dimensional display array of display points within a display area on a user display.

11. A system according to claim 10, in which the client system comprises:
a user control for defining a two-dimensional region of the display area; and
a detector for detecting those display points lying within the two-dimensional region of the display area.

12. A system according to claim 11, in which the graphical user interface is operable to display a list of data representing information items, being those information items mapped onto nodes corresponding to display points displayed within the two-dimensional region of the display area.

13. A system according to claim 12, in which the client system comprises a user control for choosing one or more information items from the list; the graphical user interface being operable to alter the manner of display within the display area of display points corresponding to selected information items.

14. A system according to any one of the preceding claims, in which the data derived from an information item includes an identification of the storage location of that information item.

15. A system according to claim 14, in which the identification comprises a universal resource indicator (URI).

16. An information storage node for use in an information retrieval system in which a set of distinct information items map to respective nodes in an array of nodes by mutual similarity of the information items, so that similar information items map to nodes at similar positions in the array of nodes; the storage node being connected via a data network to an information retrieval client system having means, responsive to data received from the storage node, for generating a node position in respect of each information item represented by the received data; the storage node comprising:
means for storing a plurality of information items and indexing means for transmitting data derived from information items stored at that storage node to the client system via the data network.

17. An information retrieval client system in which a set of distinct information items map to respective nodes in an array of nodes by mutual similarity of the information items, so that similar information items map to nodes at similar positions in the array of nodes; the client system being connectable via a data network to one or more information item storage nodes each comprising means for storing a plurality of information items and indexing means for transmitting data derived from information items stored at that storage node to the client system via the data network;
the client system comprising means, responsive to data received from the indexing means of a storage node, for generating a node position in respect of each information item represented by the received data.

18. A portable data processing device comprising a client system according to claim 17.

19. Video acquisition and/or processing apparatus comprising a client system according to claim 17.

20. An information retrieval method in which a set of distinct information items map to respective nodes in an array of nodes by mutual similarity of the information items, so that similar information items map to nodes at similar positions in the array of nodes in a system comprising a data network, an information retrieval client system connected to the data network, and one or more information item storage nodes connected to the data network;
the method comprising the steps of:
each storage node storing a plurality of information items;
each storage node transmitting data derived from information items stored at that storage node to the client system via the data network; and
the client system, responsive to data received from the indexing means of a storage node, generating a node position in respect of each information item represented by the received data.

21. A method of operation of an information storage node for use in an information retrieval system in which a set of distinct information items map to respective nodes in an array of nodes by mutual similarity of the information items, so that similar information items map to nodes at similar positions in the array of nodes; the storage node being connectable via a data network to an information retrieval client system having means, responsive to data received from the storage node, for generating a node position in respect of each information item represented by the received data; the method comprising the steps of:
storing a plurality of information items; and
transmitting data derived from information items stored at that storage node to the client system via the data network.

22. A method of operation of an information retrieval client system in which a set of distinct information items map to respective nodes in an array of nodes by mutual similarity of the information items, so that similar information items map to nodes at similar positions in the array of nodes; the client system being connectable via a data network to one or more information item storage nodes each comprising means for storing a plurality of information items and indexing means for transmitting data derived from information items stored at that storage node to the client system via the data network;
the method comprising, responsive to data received from the indexing means of a storage node, generating a node position in respect of each information item represented by the received data.

23. Computer software comprising program code for carrying out a method according to any one of claims 20 to 22.

24. A providing medium for providing software according to claim 23.

25. A medium according to claim 24, the medium being a storage medium.

26. A medium according to claim 24, the medium being a transmission medium.
